# EUROPÄISCHE PATENTSCHRIFT

(11) **EP 0 490 925 B1**
(45) Veröffentlichungstag und Bekanntmachung des Hinweises auf die Patenterteilung: **10.01.1996**
(21) Anmeldenummer: 90912884.5
(22) Anmeldetag: 05.09.1990
(51) Int. Cl.: H01M 8/06

(54) **ANLAGE ZUR ERZEUGUNG ELEKTRISCHER ENERGIE**
INSTALLATION FOR GENERATING ELECTRICAL ENERGY
INSTALLATION POUR PRODUIRE DE L'ENERGIE ELECTRIQUE

(30) Priorität: 06.09.1989 IT 4833589
(43) Veröffentlichungstag der Anmeldung: 24.06.1992
(73) Patentinhaber: MANNESMANN Aktiengesellschaft, D-40027 Düsseldorf (DE); K.T.I. Group B.V., NL-2700 AB Zoetermeer (NL)
(72) Erfinder: PIETROGRANDE, Paolo, I-00199 Rom (IT); GIACOBBE, Francesco, I-00147 Rom (IT)
(74) Vertreter: Meissner, Peter E., Dipl.-Ing.
(86) Internationale Anmeldenummer: DE9000687
(87) Internationale Veröffentlichungsnummer: WO9103844

(56) Entgegenhaltungen:
- EP-A- 0 170 277
- EP-A- 0 246 649
- FR-A- 2 500 217
- GB-A- 2 182 195
- US-A- 4 759 997
- PATENT ABSTRACTS OF JAPAN, Band 11, Nr. 254 (E-533)(2701), 18 August 1987
- PATENT ABSTRACTS OF JAPAN, Band 13, Nr. 16 (E-703)(3364), 13. Januar 1989
- PATENT ABSTRACTS OF JAPAN, Band 12, Nr. 335 (E-656)(3182), 9. September 1988
- PATENT ABSTRACTS OF JAPAN, Band 13, Nr. 31 (E-707)(3379), 24. Januar 1989
- PATENT ABSTRACTS OF JAPAN, Band 7, Nr. 49 (E-161)(1194), 25. Februar 1983
- PATENT ABSTRACTS OF JAPAN, Band 12, Nr. 369 (E-665)(3216), 4. Oktober 1988
- PATENT ABSTRACTS OF JAPAN, Band 13, Nr. 5 (E-701)(3353), 9. Januar 1989

## Beschreibung

Die Erfindung betrifft eine Anlage zur Erzeugung elektrischer Energie, wobei Brennstoffzellen die Umsetzung von in einem Brennstoff chemisch gebundener Energie in elektrische Energie bewirken.

Brennstoffzellen gehören seit vielen Jahren zum bekannten Stand der Technik. Es gibt eine Reihe von unterschiedlichen Typen, die jeweils bei unterschiedlichen Drücken, Temperaturen und mit unterschiedlichen Elektrolyten betrieben werden. Beispiele sind alkalische Brennstoffzellen (AFC = Alkaline Fuel Cell), Phosphorsäure-Brennstoffzellen (PAFC = Phophoric Acid Fuel Cell), Schmelzkarbonat-Brennstoffzellen (MCFC = Molten Carbonate Fuel Cell), Festoxid-Brennstoffzellen (SOFC = Solid Oxide Fuel Cell) oder Festpolymer-Brennstoffzellen (SPFC = Solid Polymer Elektrolyte Fuel Cell). Eine Brennstoffzelle weist jeweils einen Anodenraum und einen Kathodenraum auf, zwischen denen ein elektrischer Strom über einen Elektrolyten fließt. Im Regelfall wird dem Anodenraum Wasserstoffgas oder ein anderes H₂-reiches Gas als Brennstoff und dem Kathodenraum ein O₂-haltiges Gas (insbesondere Luft) als Oxidationsmittel zugeführt.

In der Brennstoffzelle findet dann ein Oxidationsprozeß auf im Vergleich zu einer thermischen Verbrennung relativ niedrigem Temperaturniveau statt, weswegen man auch von einer "kalten Verbrennung" des Brennstoffs spricht. Im allgemeinen kann die Effizienz der Brennstoffzelle durch Erhöhung des Betriebsdrucks gesteigert werden. Da ihr mechanischer Aufbau sehr empfindlich ist, muß Vorsorge getroffen werden, daß die Drücke des H₂-reichen Anodengases und des O₂-haltigen Kathodengases stets nahezu gleichhoch sind, um mechanische Beschädigungen zu vermeiden. Darüber hinaus muß eine Regelung zur Kühlung der Brennstoffzelle vorgesehen sein, damit unabhängig von Stromabnahmeschwankungen die Betriebstemperatur auf dem jeweils erforderlichen Niveau bleibt. Ein weiterer wichtiger Punkt, der sich auf die Betriebssicherheit eines Brennstoffzellensystems auswirkt, ist die Einhaltung eines ausreichenden Reinheitsgrades des Anodengases. So sind einige Brennstoffzellentypen empfindlich gegen CO (z.B. PAFC), andere wie etwa MCFC oder SOFC dagegen nicht.

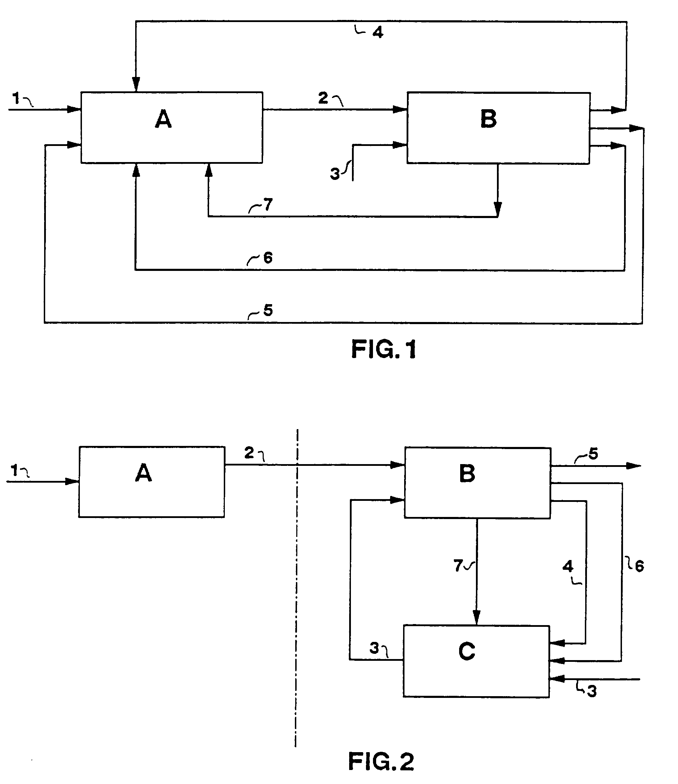

Um den Gesamtwirkungsgrad der elektrischen Stromerzeugung mittels Brennstoffzellen zu steigern und die Konkurrenzfähigkeit zu herkömmlichen Stromerzeugungsverfahren zu erreichen, hat man bisher die Erzeugung des H₂-reichen Gases unmittelbar mit der Stromerzeugung verbunden, da auf diese Weise die im Brennstoffzellenprozeß anfallenden Energie- und Fluidströme im Rahmen der Umwandlung eines Kohlenwasserstoffs in ein H₂-reiches Gas genutzt werden konnte. Das führte zu einer starken Integration beider Teilsysteme, wie sie anhand der schematischen Darstellung in Figur 1 näher erläutert werden soll.

Das mit B bezeichnete Brennstoffzellensystem kann aus einer einzelnen, aber selbstverständlich auch aus mehreren zusammengeschalteten Brennstoffzellen bestehen. (Im folgenden soll bei der Erwähnung des Begriffs Brennstoffzelle stets auch die Möglichkeit mehrerer Brennstoffzellen eingeschlossen sein.)

Diese Brennstoffzelle B weist zwei Eingangsgasströme auf, und zwar einen H₂-reichen Anodengasstrom 2 und einen O₂-haltigen Kathodengasstrom 3, der zum Beispiel aus komprimierter Luft besteht. Die Druckluft kann zum Beispiel durch einen elektrisch betriebenen Kompressor bereitgestellt werden. Die Fluidströme 2 und 3 werden durch entsprechende Regeleinrichtungen stets auf gleichem Druckniveau gehalten, um mechanische Beschädigungen der Brennstoffzelle zu vermeiden. Durch den in der Brennstoffzelle stattfindenden chemisch/physikalischen Prozeß entstehen Abgase. Der aus dem Anodenraum abgeführte Anodenabgasstrom 4 enthält, da der H₂-Gehalt des H₂-reichen Gases 2 nicht vollständig verbraucht werden kann, noch einen Restgehalt an H₂. Je nach Betriebsweise und Brennstoffzellentyp liegt der Restgehalt etwa im Bereich 5-30 % von der Eintrittsmenge. Der tatsächliche Wert ist abhängig von der Gaszusammensetzung und der Brennstoffausnutzung in der Zelle. Auch von dem ursprünglichen O₂-Gehalt des Kathodengasstroms 3 ist im aus dem Kathodenraum entweichenden Kathodenabgasstrom 6 noch ein Teil (häufig noch ca. die Hälfte) enthalten. Da bei der "kalten Verbrennung" des Wasserstoffs in der Brennstoffzelle ein entsprechender Teil Wasser entsteht, kann dieses beispielsweise durch Kondensation des Kathodenabgases (in manchen Brennstoffzellen auch des Anodenabgases) in Form von Wasser hoher Reinheit abgetrennt werden. In Figur 1 ist der zurückgewonnene Wasserstrom mit dem Bezugszeichen 5 bezeichnet. Schtießlich führt aus der Brennstoffzelle B ein Fluidstrom 7 heraus, der die Abfuhr von Wärme symbolisieren soll, also das Kühlsystem der Brennstoffzelle B repräsentiert. Ein solches Kühlsystem kann als offenes oder auch als geschlossenes Kühlsystem, bei dem die abzuführende Wärme an ein anderes Medium abgegeben wird, gestaltet sein. In bekannten Anlagen sind in der Regel offene Kühlsysteme im Einsatz, die zur Dampferzeugung benutzt werden. Das einzusetzende Kühlwasser muß dabei sehr sorgfältig gereinigt sein (besser als normales demineralisiertes Kesselwasser).

Dies ist nicht nur sehr teuer, sondern bringt vielfach nicht einmal die erhoffte langfristige Betriebsfähigkeit des Kühlsystems wegen der immer noch im Wasser enthaltenen Restgehalte an Mineralien. Durch die Fluidströme 4 bis 7 ist das Brennstoffzellensystem B in die Erzeugung des H₂-reichen Anodengases, die in der H₂-Einheit A stattfindet, integriert. Die H₂-Einheit A arbeitet meistens als Dampfreformieranlage. Als Einsatzmaterial wird ihr ein Strom gasförmiger Kohlenwasserstoffe 1 zugeführt, der mit Wasserdampf gesättigt wird. Dafür kann zumindest teilweise das aus dem Abgas der Brennstoffzelle A zurückgewonnene Wasser 5 eingesetzt werden. Zur Überführung des Wassers in die Dampfphase und zur Überhitzung des Dampfes kann die bei der Kühlung der Brennstoffzelle B abfallende Wärme genutzt werden. Der H₂-Gehalt (und die sonstigen brennbaren Bestandteile wie CO und Kohlenwasserstoffe) im Anodenabgasstrom 4 und der O₂-Gehalt des Kathodenabgasstroms 6 werden häufig zur Verbrennung genutzt, um den Wärmebedarf eines indirekt beheizten Reformers in der H₂-Einheit A zumindest teilweise zu decken, da der Dampfreformierprozeß stark endotherm verläuft. Da der Betriebsdruck der Brennstoffzelle B normalerweise relativ hoch ist (ca. 2-10 bar), wird die Dampfreformierung und vielfach auch die Verbrennung zur indirekten Beheizung des Reformers bei entsprechend hohen Drücken durchgeführt. Dies bringt wegen der erforderlichen warmfesten Werkstoffe besonders hohe Kosten für die Herstellung der Dampfreformieranlage und darüber hinaus erhöhte Sicherheitsprobleme mit sich.

Das Schema in Figur 1 ist nur sehr grob und enthält keine Einzelheiten. So ist etwa nicht gesondert dargestellt, daß das in der H₂-Einheit A erzeugte Produktgas vor seiner Einleitung in die Brennstoffzelle B gekühlt und in der Regel vorher einer CO/H₂-Shift-Behandlung unterzogen wird. Die dabei abfallende Wärme wird auch zur Beheizung der Eingangsfluidströme des Dampfreformierprozesses genutzt.

In Figur 1 ist die starke Verflechtung zwischen der H₂-Einheit A und dem Brennstoffzellensystem B deutlich sichtbar. Man erkennt daran auch, daß Betriebsschwankungen der einen Einheit unmittelbare Auswirkungen auf die andere Einheit haben. Während der elektrochemische Prozeß in der Brennstoffzelle B sehr schnell (praktisch momentan) beeinflußt werden kann, reagiert das Teilsystem der Erzeugung eines H₂-reichen Gases (H₂-Einheit A) nur sehr langsam (in der Größenordnung von einigen Minuten) auf entsprechende Eingriffe. Aus diesem Grunde bereiten gerade die Anfahrphase und Anpassungen an unterschiedliche Lastfälle auf der Elektrizitätsabgabeseite-erhebliche regelungstechnische Schwierigkeiten. Dies alles führte bisher mit den bereits vorher erläuterten Problemen trotz des großen anlagentechnischen Aufwandes zu immer noch unbefriedigenden Werten hinsichtlich der Dauer der störungsfreien Betriebszeiten. Diese liegen bei den bisher ca. 80 Anlagen, die weltweit realisiert wurden, bei einigen 1000 Stunden oder deutlich darunter. Nur ganz wenige Anlagen haben bis zu 20.000 Stunden gelaufen. Der Markt fordert aber eine Mindestlaufzeit von 100.000 h und mehr.

Aus der GB-A-21 82 195 ist ein Verfahren zur Elektrizitätserzeugung mittels Brennstoffzellen bekannt, bei dem im Vergleich zu dem in Figur 1 dargestellten Stand der Technik die Teilsysteme zur Erzeugung des H₂-reichen Gases und der Brennstoffzelle nicht mehr so stark miteinander verknüpft sind. So werden das Anodenabgas und das Kathodenabgas der Brennstoffzelle einer katalytischen Verbrennung unterzogen, wobei das dadurch erzeugte Verbrennungsabgas nicht zur Beheizung einer indirekt befeuerten Dampfreformieranlage herangezogen wird, sondern auf einer Gasturbine entspannt wird. Diese Gasturbine treibt einen Kompressor an, der die Druckluft zum Betrieb der Brennstoffzelle und ggf. auch zur Durchführung der katalytischen Verbrennung liefert.

Eine weitere wichtige Rufgabe für den Druckluftkompressor ist die Versorgung der Dampfreformieranlage mit Verbrennungsdruckluft. In diesem Verfahren wird ein spezieller Reformer verwendet, der eine Primärreformerstufe und eine Sekundärreformerstufe enthält. Zwischen beiden Stufen findet zur Beheizung im bereits erzeugten Produktgas eine Teilverbrennung statt, deren Sauerstoffbedarf durch den Druckluftkompressor gedeckt werden muß.

Auch bei bekannten Brennstoffzellensystemen mit indirekt befeuerten Dampfreformieranlagen findet die Verbrennung für die indirekte Beheiiung häufig unter erhöhtem Druck statt, so daß die Verbrennungsluft in Form von Druckluft zugeführt werden muß.

Ein weiteres Merkmal des aus der GB-A-21 82 195 bekannten Verfahrens ist, daß die für die Verbrennung im Dampfreformer benötigte Verbrennungsdruckluft - in einer Variante des Verfahrens nach vorheriger Sättigung mit Wasserdampf - durch die in der katalytischen Verbrennung der Abgase der Brennstoffzelle erzeugten heißen Rauchgase vorgewärmt wird. Die Rückgewinnung von Wasser aus dem abgekühlten Rauchgas der katalytischen Verbrennung als Einsatzstoff für die Dampfreformierung wird lediglich als mögliche Verfahrensvariante beschrieben. Zusammenfassend läßt sich daher feststellen, daß zwischen dem System zur Erzeugung eines H₂-reichen Gases und dem Brennstoffzellensystem bei diesem Verfahren noch drei Fluidströme bestehen, und zwar der H₂-Versorgungsstrom zur Brennstoffzelle, der Druckluftstrom zum Dampfreformer und der Wärmestrom (wenn letzterer auch als "Fluidstrom" im weiteren Sinne aufgefaßt wird). Damit liegt nach wie vor eine starke Interdependenz zwischen den genannten Teilsystemen vor, so daß die bisher bestehenden regelungstechnischen Probleme immer noch nicht gelöst sind. Auch der Bau des Dampfreformers bleibt aufwendig, da er wie überhaupt die gesamte Anlage auf den Betriebsdruck der Brennstoffzelle ausgelegt werden muß.

Aus der gattungsbildenden FR 2500217 ist eine Hochtemperatur-Brennstoffzelle mit Schmelzkarbonat-Elektrolyt bekannt, wobei aber das Wasserstoffgas aus einer externen Quelle zugeführt wird.

Eine weitere Brennstoffzellanlage zur Erzeugung wasserstoffreichen Gases ist aus der EP 0 170 277 bekannt.

Zur Erhöhung des Wärmewirkungsgrades durch Erhöhung der Temperetur des die Turbine antreibenden Gases ist eine zusätzliche Verbrennung vorgesehen für das nichtverbrannte Gas im Anodenabgas mit dem Katodenabgas.

Aufgabe der Erfindung ist es, eine Vorrichtung gemäß dem Oberbegriff des Patentanspruchs 1 zur Erzeugung elektrischer Energie unter Einsatz von Brennstoffzellen dahingehend zu verbessern, daß insbesondere der Regelungsaufwand zur Sicherung eines störungsfreien Betriebs möglichst niedrig ist und die vorher erwähnten Nachteile weitgehend vermieden werden.

Gelöst wird diese Aufgabe erfindungsgemäß durch eine Anlage mit den Merkmalen des Patentanspruchs 1. Vorteilhafte Ausgestaltungen der Anlage sind in den Unteransprüchen 2 bis 9 angegeben.

Anhand der Figuren 1 bis 3, in denen funktionsgleiche Teile jeweils mit gleichen Bezugszeichen versehen sind, wird die Erfindung nachfolgend näher erläutert. Es zeigen:
- Figur 1: ein Schema eines Elektrizitätserzeugungssystems nach dein bisherigen Stand der Technik,
- Figur 2: eine schematische Prinzipdarstellung der Erfindung,
- Figur 3: ein Ausführungsbeispiel einer erfindungsgemäßen Anlagenkonfiguration.

Wie bereits eingangs ausführlich erläutert wurde, zeigt Figur 1 die bisher übliche starke verfahrenstechnische Integration von H₂-Erzeugung und Brennstoffzellensystem. Demgegenüber macht das grobe Schema der Erfindung in Figur 2 bereits deutlich, daß diese Integration auf ein Minimum zurückgeführt ist. Die Verbindung zwischen der H₂-Einheit und dem Brennstoffzellensystem B einschließlich dem Drucklufterzeugungssystem C besteht nur noch in der unverzichtbaren Zuleitung des H₂-reichen Anodengasstroms 2. Auf alle anderen Verbindungen zwischen diesen beiden Teilsystemen A und B/C konnte verzichtet werden.

Das bedeutet, daß der für die Brennstoffzelle B benötigte Wasserstoff völlig unabhängig von dem Betrieb der Brennstoffzelle B, erzeugt werden kann. Es ist vielfach vorteilhaft, den benötigten Wasserstoff entsprechend dem H₂-Bedarf der Brennstoffzelle B in deren unmittelbarer Nähe zu erzeugen; dabei sind aber Anpassungen der H₂-Erzeugung vergleichsweise leicht durchzuführen, da die H₂-Einheit erfindungsgemäß verfahrenstechnisch und regelungstechnisch weitestgehend unabhängig von der Brennstoffzelle B betrieben werden kann. Wesentlich ist, daß der Anodenabgasstrom 4 und der Kathodenabgasstrom 6 zur vorzugsweise katalytischen Verbrennung in einer Brennkammer vorgesehen sind und das dadurch erzeugte Verbrennungsabgas ausschließlich zum Antrieb der Drucklufterzeugungseinheit C verwendet wird. Es wird also nicht wie im bisherigen Stand der Technik zur Vorwärmung irgendwelcher Prozeßmedien genutzt, die der H₂-Erzeugung dienen. Zur Kühlung der Brennstoffzelle B können ohne weiteres geschlossene und daher wenig störanfällige Kühlsysteme vorgesehen werden, da die Brennstoffzelle B nicht mehr zur Dampferzeugung für die H₂-Einheit A herangezogen werden muß.

Der Abwärmestrom 7 kann beispielsweise zur Vorwärmung des Druckluftstroms 3 für die Brennstoffzelle B oder zur Vorwärmung von Druckluft, die im Bedarfsfall für die katalytische Verbrennung des Anodenabgases eingesetzt wird, verwendet werden. Der im Abgas des Brennstoffzellensystems B enthaltene Wasseranteil, der mit dem Bezugszeichen 5 bezeichnet ist, wird an sich nicht weiter benötigt, sondern kann mit dem Abgas der katalytischen Verbrennung abgeführt werden. Der Wasseranteil kann jedoch auch kondensiert werden und für anderweitige Zwecke außerhalb der Anlage verwendet werden. Auch die in den Teilsystemen A und B anfallende Abwärme kann bei Bedarf für Wärmezwecke außerhalb der erfindungsgemäßen Anlage eingesetzt werden, ohne daß hierdurch die weitgehende Entkoppelung der Teilsysteme A und B beeinträchtigt würde.

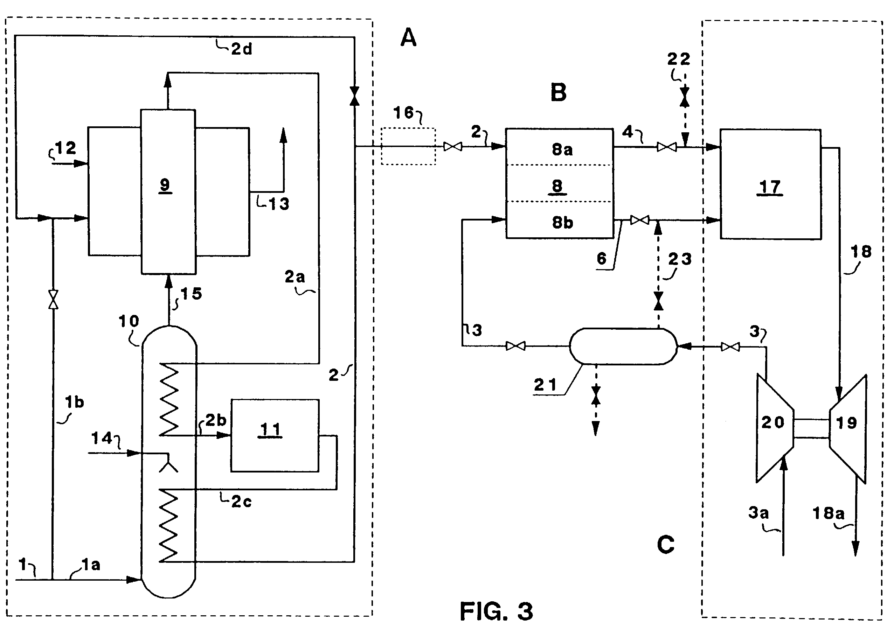

Anhand des schematischen in Figur 3 dargestellten Ausführungsbeispiels einer Anlage gemäß der Erfindung werden im folgenden weitere Einzelheiten erläutert. Die Anlage besteht im wesentlichen aus den Systemen H₂-Einheit A, Brennstoffzellensystem B (mit Brennstoffzelle 8) und Drucklufterzeugungseinheit C. Die Systeme A und C sind durch gestrichelte Einrahmungen hervorgehoben. Grundsätzlich kann ein beliebiges H₂-Versorgungssystem für die Brennstoffzelle 8 verwendet werden. Für den Fall, daß der Druck der H₂-Einheit A geringer ist als der vorgesehene Betriebsdruck der Brennstoffzelle 8, ist ein H₂-Kompressor 16 (gestrichelt angedeutet) in die H₂-Zuleitung 2 zum Anodenraum 8a der Brennstoffzelle 8 in Weiterbildung der Erfindung vorgesehen. Bevorzugt wird die Ausführungsform, bei der wie in Figur 3 die H₂-Einheit A als Dampfreformieranlage gestaltet ist. Durch eine Leitung wird ein Strom 1 gasförmiger Kohlenwasserstoffe wie beispielsweise Erdgas oder Biogas in die Reformieranlage geführt. Ein Teilstrom 1a dieser Kohlenwasserstoffe gelangt in einen Sättiger 10, in dem er mit Wasserdampf gesättigt wird.

Vorzugsweise wird hierfür ein Sättiger 10 eingesetzt, wie er in der EP 0 320 440 A2 derselben Anmelder beschrieben ist. In der unteren Hälfte dieses Sättigers 10 wird das zugeführte Kohlenwasserstoffgas im Gegenstrom zu einem über die Wasserzuleitung 14 zugeführten Wasserstrom, der über Rieselkörper (z.B. Raschigringe) nach unten läuft, mit flüssigem Wasser in Kontakt gebracht. Der Sättiger 10 wird in diesem unteren Teil durch die in dem erzeugten Produktgas (H₂-reiches Gas) enthaltene latente Wärme indirekt beheizt. Hierzu wird das Produktgas über die Leitung 2c in einen in der unteren Hälfte des Sättigers 10 befindlichen Wärmeaustauscher geleitet. Der erforderliche Wasserdampf zur Sättigung des gasförmigen Kohlenwasserstoffs wird also hierbei nicht von außerhalb zugeführt, sondern entsteht unmittelbar im Sättiger 10 selbst. Nach Erreichen der Sättigung wird das Kohlenwasserstoff/Wasserdampf-Gemisch im oberen Teil des Sättigers 10 weiter so aufgeheizt, daß es in den Reformer 9 eingeleitet werden kann.

Diese weitere Aufheizung findet wiederum auf indirektem Wege mit der latenten Wärme des Produktgasstroms statt, der über die Leitung 2a unmittelbar aus dem Reformer 9 kommt und wiederum im Gegenstrom zum Kohlenwasserstoff/Wasserdampf-Gemisch geführt wird. Der Produktgasstrom verläßt den im oberen Teil des Sättigers 10 befindlichen Wärmeaustauscher über die Leitung 2b, die zu einem CO/H₂-Shift-Reaktor 11 führt. Selbstverständlich kann, wie vielfach üblich, der Shift-Reaktor 11 auch aus zwei oder mehreren hintereinandergeschalteten Einheiten mit zwischengeschaltetem Wärmeaustauscher zur Abkühlung des Produktgases bestehen. Im Shift-Reaktor 11 wird in einer exothermen Reaktion der H₂-Gehalt im Produktgas erhöht und der CO-Gehalt entsprechend vermindert. Die im Shift-Reaktor 11 eintretende Temperaturerhöhung im Produktgas kommt der Erzeugung des Kohlenwasserstoff/Wasserdampf-Gemisches im unteren Teil des Sättigers zugute.

Das auf Vorwärmtemperatur gebrachte Kohlenwasserstoff/Wasserdampf-Gemisch gelangt über die Leitung 15 aus dem Sättiger 10 in den Reaktionsraum des Reformers 9, der vorzugsweise indirekt beheizt wird, aber auch direkt beheizt sein kann. Hierzu wird z.B. ein Teilstrom 1b des zugeführten Gasstroms 1 im Feuerraum des Reformers 9 unter Zufuhr eines Verbrennungsluftstroms 12 verbrannt. Diese Verbrennung findet vorzugsweise unter atmosphärischen Bedingungen statt, so daß hierfür keine Druckluftzufuhr erforderlich ist. Der Abgasstrom aus dem Verbrennungsraum ist mit 13 bezeichnet und kann beispielsweise noch zur Vorwärmung des in den Sättiger einzuspeisenden Wassers 14 und/oder des Verbrennungsluftstroms 12 eingesetzt werden. Die Möglichkeit zur praktisch drucklosen Verbrennung trägt zur Reduzierung der Herstellkosten des Reformers 9 und der übrigen Anlagenteile der H₂-Einheit A bei. Hinzu kommt, daß auch die Dampfreformierung selbst nahezu drucklos oder bei geringen Drücken (z.B. 1-5 bar) durchgeführt werden kann, da im Bedarfsfall der H₂-Kompressor 16 den Strom des H₂-reichen Gases auf den vorgesehenen Betriebsdruck der Brennstoffzelle 8 bringen kann. Demgegenüber muß bei den bekannten Verfahren die Dampfreformierung stets unter relativ hohem Druck erfolgen, um den Betriebsdruck der Brennstoffzelle B zu erreichen. Die weitestgehende Unabhängigkeit der H₂-Einheit A vom Brennstoffzellensystem B wird dadurch verbessert, daß eine im normalen Betriebsfall durch ein Ventil verschlossene Leitung 2d vorgesehen ist, die die zeitweilige Einleitung des erzeugten H₂-reichen Gases in den Feuerraum des Reformers 9 gestattet. Dadurch ist es völlig problemlos möglich, den Reformer aus dem kalten Zustand heraus anzufahren oder zeitweilig in einem Bereitschaftszustand mit geringster Produktionsleistung zu betreiben, ohne daß der erzeugte Wasserstoff von der Brennstoffzelle 8 abgenommen werden muß.

Während der Anodenraum 8a der Brennstoffzelle 8 über die Leitung 2 mit dem H₂-reichen Anodengasstrom versorgt wird, erhält der Kathodenraum 8b über die Leitung 3 die erforderliche Menge an O₂-haltigem Gas in Form von komprimierter Luft. Im dargestellten Ausführungsbeispiel ist vorzugsweise in die Druckluftleitung 3 ein Druckluftspeicher 21 eingeschaltet, der mit einer Höchstdruckregelung versehen ist und die in einem Kompressor 20 komprimierte Druckluft zur Pufferung zwischenspeichert, so daß auch dann noch Druckluft zur Verfügung stehen kann, wenn der Kompressor 20 aus irgendeinem Grunde nicht oder nicht mit ausreichender Leistung arbeitet. Der Kompressor 20, der vorzugsweise als Turbokompressor ausgebildet ist und auch mehrstufig sein kann, saugt die Frischluft über die Leitung 3a an und ist antriebsmäßig mit einer Gasturbine 19 verbunden. Diese Gasturbine 19 wird mit den in einer Brennkammer 17 durch vorzugsweise katalytische Verbrennung erzeugten Verbrennungsabgasen betrieben, die über die Leitung 18 zugeleitet und nach ihrer Entspannung über die Leitung 18a wieder abgeführt-werden. In der Brennkammer 17 werden im Normalbetrieb die über die Leitungen 4 und 6 aus der Brennstoffzelle 8 kommenden Ströme des Anodenabgases, das einen Rest-H₂-Gehalt und in der Regel noch weitere brennbare Komponenten wie CO und nicht reformierte Kohlenwasserstoffe enthält, und des Kathodenabgases, das noch einen Restsauerstoffgehalt aufweist, miteinander verbrannt.

Für den Fall, daß der O₂-Gehalt nicht ausreichen sollte für eine vollständige Verbrennung, kann in Weiterbildung der Erfindung über die mit einem Ventil verschließbare Leitung 23 auch Druckluft aus dem Druckluftspeicher 21 entnommen und in die Brennkammer 17 geführt werden. Eine Nutzung der erzeugten Druckluft für den Betrieb der H₂-Einheit A ist erfindungsgemäß nicht vorgesehen.

Es ist vorteilhaft, auch eine durch ein Ventil verschließbare Leitung 22 vorzusehen, durch die ein anderes brennbares Gas (z.B. Erdgas oder Biogas) unabhängig vom Anodenabgasstrom in die Brennkammer 17 eingeleitet werden kann. Damit ist auch der Betrieb der Brennkammer 17 und des Turbinen/Kompressorsystems 19, 20 unabhängig vom Betrieb der Brennstoffzelle 8 möglich. Für den Einsatz im Drucklufterzeugungssystem C eignen sich Abgasturbolader, wie sie im Motorenbau für Kraftfahrzeuge benutzt werden, in besonderer Weise.

Im Regelfall wird die Brennstoffzelle 8 so betrieben, daß der Restgehalt an H₂ zusammen mit den gegebenenfalls vorhandenen sonstigen brennbaren Bestandteilen des Anodenabgases ausreicht, um gerade so viel Wärme bei der Verbrennung in der Brennkammer 17 freizusetzen, daß diese an der Gasturbine 19 zur Erzeugung der benötigten Druckluftmenge genügt.

Die Kühlung der Brennstoffzelle 8, die in Figur 3 nicht gesondert dargestellt ist, kann z.B. über einen geschlossenen Kühlkreislauf erfolgen, da die Effizienz der Kühlung im Hinblick auf die Wiederverwertung der abgeführten Wärme (z.B. Dampferzeugung) nicht vordringlich ist, da das als H₂-Einheit vorzugsweise verwendete System zur H₂-Erzeugung überhaupt keinen von außen zugeführten Prozeßdampf benötigt, sondern im Sättiger 10 mit flüssigem Wasser arbeitet.

Die Anforderungen an den Reinheitsgrad dieses Wassers sind erheblich geringer als die Anforderungen an das Kühlwasser der Brennstoffzellen in bisher bekannten Verfahren, bei denen dieses Kühlwasser direkt in Wasserdampf umgesetzt (offenes Kühlsystem) und für die Dampfreformierung im Rahmen der H₂-Erzeugung genutzt werden mußte. Bei geschlossenen Kühlsystemen hätte die verfügbare Temperaturdifferenz im Wärmeaustauscher nicht ausgereicht für eine sinnvolle Dampferzeugung.

In der vorliegenden Erfindung kann die Abwärme der Brennstoffzelle 8 aber mit Vorteil zur Vorwärmung des durch die Leitung 3 der Brennstoffzelle 8 zugeführten Druckluftstroms oder des ggf. der Brennkammer 17 zugeführten Druckluftstroms verwendet werden.

Als Brennstoffzelle 8 kommen im Rahmen der Erfindung Brennstoffzellen vom Typ AFC, SPFC und insbesondere PAFC, die bei relativ niedrigen Temperaturen (unter 200°C) arbeiten, zum Einsatz. Der Betriebsdruck der Brennstoffzelle sollte im Bereich 1-10 bar, vorzugsweise im Bereich 3-8 bar, gehalten werden, da dies einerseits eine gute Ausbeute in der Elektrizitätserzeugung gestattet und andererseits keine besonders hohen Anforderungen an die Festigkeitseigenschaften der Komponenten der Anlage stellt. Unabhängig davon kann der Druck der H₂-Einheit niedriger gewählt werden, da erfindungsgemäß ein H₂-Kompressor zwischengeschaltet werden kann. Dies reduziert zusammen mit der erheblich vereinfachten Steuer- und Regelungstechnik infolge der weitgehend unabhängig voneinander betreibbaren Hauptaggregate der Anlage die Gesamtkosten deutlich gegenüber herkömmlichen Anlagen, die wegen der starken Integration der Hauptaggregate äußerst schwierig zu betreiben sind. Als weiteren wichtigen Vorteil bringt die Erfindung gleichzeitig eine deutliche Verbesserung der Betriebssicherheit und Anlagenverfügbarkeit mit sich. Nicht nur das Anfahren der gesamten Anlage, bei dem die Hauptaggregate unabhängig von dem Brennstoffzellensystem in Betrieb genommen werden können, sondern auch die Reaktion auf Lastschwankungen in der Stromabnahme können infolge der verfahrenstechnischen Entflechtung der Hauptaggregate problemlos bewältigt werden.

Die technischen Daten einer erfindungsgemäßen 200-kW-Anlage, die mit Brennstoffzellen vom Typ PAFC arbeitet und etwa dem Anlagenschema in Figur 3 entspricht, sind beispielsweise wie folgt:

| Einspeisung | Erdgas oder Biogas |
|---|---|
| Elektrische Nennleistung | 180 kW |
| Wärmeleistung | 210 kW |
| Garantierter elektrischer Wirkungsgrad | 40 % (unterer Heizwert) |
| Betriebsbereich | 40 % - 100 % |
| Lastveränderung von 40 % auf 100 % | in 10 min |
| Erdgasverbrauch | 387000 kcal/h |

Die erfindungsgemäße Anlage zeichnet sich durch einen kompakten Aufbau aus, der wenig Stellfläche benötigt:

| | |
|---|---|
| Dampfreformieranlage | 6,0 x 2,5 x 5,0 m |
| Brennstoffzelle | 2,5 x 2,5 x 3,0 m |
| Turbokompressor | 2,5 x 2,5 x 1,0 m |

## Patentansprüche

1. Anlage zur Erzeugung elektrischer Energie mit einer Einheit zur Erzeugung von H₂-reichem Gas (H₂-Einheit A), mit einem Brennstoffzellensystem (B), deren Anodenraum (8a) eine H₂-Zuleitung (2) von der H₂-Einheit (A) aufweist, und mit einer Drucklufterzeugungseinheit (C) enthaltend eine Gasturbine (19), einem Kompressor (20) und eine Brennkammer (17), insbesondere eine Brennkammer für eine katalytische Verbrennung, die sowohl eine Gaszuleitung (4) vom Anodenraum (8a) als auch eine Gaszuleitung (6) vom Kathodenraum (8b) des Brennstoffzellensystems (B) aufweist und deren Verbrennungsgasausgang über eine Abgasleitung (10) zum Eingang der Gasturbine (19) führt, wobei der Kompressor antriebsmäßig mit der Gasturbine gekoppelt ist und der Druckluftausgang des Kompressors durch eine Druckluftleitung (3) mit dem Kathodenraum (8b) des Brennstoffzellensystems (B) verbunden ist,
dadurch gekennzeichnet,
daß die H₂-Zuleitung (2) die einzige Fluidverbindungsleitung zwischen der H₂-Einheit (A) auf der einen Seite und dem eine Betriebstemperätur unter 200°C aufweisenden Brennstoffzellensystem (B) und der Drucklufterzeugungseinheit (C) auf der anderen Seite ist, daß das in der Brennkammer (17) erzeugte Verbrennungsabgas ausschließlich zum Antrieb der Gasturbine genutzt wird und daß die in der Drucklufterzeugungseinheit (C) erzeugte Druckluft nicht für den Betrieb der H₂-Einheit (A) genutzt wird.

2. Anlage nach Anspruch 1,
dadurch gekennzeichnet,
daß in die Druckluftleitung (3) ein Druckluftspeicher (21) mit Höchstdruckregelung eingeschaltet ist.

3. Anlage nach Anspruch 1 oder 2,
dadurch gekennzeichnet,
daß die Brennkammer (17) eine von dem Brennstoffzellensystem (B) unabhängige und absperrbare Zuleitung (22) für ein Brenngas aufweist.

4. Anlage nach einem der Ansprüche 2 bis 3,
dadurch gekennzeichnet,
daß die Brennkammer (17) eine absperrbare Zuleitung (23) für Druckluft aus dem Druckluftspeicher (21) aufweist.

5. Anlage nach einem der Ansprüche 1 bis 4,
dadurch gekennzeichnet,
daß die Anlage zur Dampfreformierung einen direkt oder indirekt beheizten Reformer (9), mindestens einen Shift-Reaktor (11) zur zusätzlichen Erzeugung von H₂ zu Lasten des CO-Anteils im durch Dampfreformierung erzeugbaren Produktgas und einen durch die latente Wärme des Produktgases indirekt beheizbaren Sättiger (10) aufweist, der mit noch flüssigem, gegebenenfalls vorgewärmtem Wasser und gasförmigen Kohlenwasserstoffen beschickbar und aus dem durch eine Leitung (15) ein vorgewärmtes Kohlenwasserstoff/Wasserdampf-Gemisch zum Reformer (9) führbar ist.

6. Anlage nach einem der Ansprüche 1 bis 5,
dadurch gekennzeichnet,
daß in die H₂-Zuleitung (2) ein H₂-Kompressor (16) eingeschaltet ist.

7. Anlage nach Anspruch 5 oder 6,
dadurch gekennzeichnet,
daß der Reformer hinsichtlich seiner indirekten Beheizung durch Verbrennungsgase ausgelegt ist auf eine Verbrennung von Kohlenwasserstoffen, die unter atmosphärischen Bedingungen oder bei geringem Überdruck stattfindet.

8. Anlage nach einem der Ansprüche 1 bis 7,
dadurch gekennzeichnet,
daß der Reformer (9) auf eine Dampfreformierung bei niedrigem Druck, insbesondere unter 3 bar ausgelegt ist.

9. Anlage nach einem der Ansprüche 1 bis 8,
dadurch gekennzeichnet,
daß das Brennstoffzellensystem auf einen Betriebsdruck von max. 10 bar, insbesondere von max. 3-8 bar ausgelegt ist.

## Claims

1. Equipment for production of electrical energy with a unit for producing hydrogen-rich gas (A), with a fuel-cell system (B), an anodal space (8a) of which has a hydrogen feed (2) from a hydrogen unit (A), and with a unit (C) producing compressed air, which extracts air from a gas turbine (19), a compressor (20) and a combustion chamber (17), in particular a combustion chamber for catalytic combustion, which has both a gas feed (4) from an anodal space (8a) and a gas feed from a cathodal space (8b) of a fuel-cell system, a combustion outlet of this combustion chamber leading to an intake of a gas turbine (19) via a waste-gas pipe (18), whereby a compressor is connected, in drive terms, to a said gas turbine and a compressed air outlet of a compressor is connected to a cathodal space (8) of a fuel-cell system (B) by a compressed-air pipe (3),
wherein,
a hydrogen feed (2) is an only fluid connection pipe between a hydrogen unit (A) on one side and a fuel-cell system, having an operating temperature of less that 200° C, and a unit (C) producing compressed-air on another side, and combustion gas produced in a combustion chamber (17) is used exclusively to drive a gas turbine, and compressed-air produced in a unit (C) producing compressed-air is not used for operating a hydrogen unit (A).

2. Equipment in accordance with claim 1,
wherein
a compressed-air reservoir (21) with a regulated maximum pressure is connected into a compressed-air pipe (3).

3. Equipment in accordance with claim 1 or 2,
wherein
a combustion chamber (17) has a feed (21), which can be cut off from a fuel-cell system (B) and which is independent of a said fuel-cell system, for a combustion gas.

4. Equipment in accordance with one of claims 2 and 3,
wherein
a combustion chamber (17) has a feed, which can be shut off, for compressed-air from a compressed-air reservoir (21).

5. Equipment in accordance with any one of claims 1 to 4,
wherein
a unit for re-formation of steam has a directly or indirectly heated reformer (9), at least one shift-reactor (11) for additional production of hydrogen to load a carbon monoxide content in a product-gas produced through re-formation of steam, and a saturating means (20) which can be indirectly heated by means of latent heat of a product gas, it being possible for a said saturating means to have still flowing, where applicable preheated, water and gaseous hydrocarbons fed into it and for a preheated hydrocarbon/steam mixture to be directed from a said saturating means, through a pipe (15), to a reformer (9).

6. Equipment in accordance with any one of claims 1 to 5,
wherein
a hydrogen compressor (16) is connected into a hydrogen feed (2).

7. Equipment in accordance with claim 5 or claim 6,
wherein
a reformer is designed in terms of its indirect heating by combustion gases, based on combustion of hydrocarbons which occurs in ambient conditions at a slight excess pressure.

8. Equipment in accordance with any one of claims 1 to 7,
wherein
a reformer (9) is designed based on re-formation of steam at low pressure, below 3 bars especially.

9. Equipment in accordance with any one of claims 1 to 6,
wherein
a fuel-cell system is designed based on a maximum operating pressure of 10 bars, a maximum of 3-8 bars in particular.

## Revendications

1. Installation pour produire de l'énergie électrique, comportant une unité pour engendrer du gaz riche en H₂ (unité A de H₂), un système de piles à combustible (B), dont l'espace anodique (8a) présente un conduit d'amenée de H₂ (2) de l'unité de H₂ (A), et une unité pour produire de l'air comprimé (C) comprenant une turbine à gaz (19) et un compresseur (20) et une chambre de combustion (17), en particulier une chambre de combustion pour une combustion catalytique, qui présente aussi bien un conduit d'amenée de gaz (4) de l'espace anodique (8a) qu'un conduit d'amenée de gaz (6) de l'espace cathodique (8b) du système de piles à combustible (8), et dont la sortie des gaz de combustion mène, par l'intermédiaire d'un conduit de gaz d'échappement (18), à l'entrée de la turbine à gaz (19), le compresseur étant couplé en entraînement avec la turbine à gaz et la sortie d'air comprimé du compresseur étant reliée, par un conduit d'air comprimé (3), à l'espace cathodique (8b) du système de piles à combustible (B),
caractérisée en ce que le conduit d'amenée de H₂ (2) représente le conduit de liaison fluidique unique entre l'unité de H₂ (A) d'une part et le système de piles à combustible (B) présentant une température de service au-dessous de 200°C et l'unité de production d'air comprimé (C) d'autre part, en ce que le gaz d'échappement de combustion engendré dans la chambre de combustion (17) est utilisé exclusivement pour l'entraînement de la turbine à gaz, et en ce que l'air comprimé créé dans l'unité de production d'air comprimé (C) n'est pas utilisé pour le fonctionnement de l'unité de H₂ (A).

2. Installation selon la revendication 1,
caractérisée en ce qu'un réservoir d'air comprimé (21) à réglage de pression maximale est monté dans le conduit d'air comprimé (3).

3. Installation selon la revendication 1 ou 2,
caractérisée en ce que la chambre de combustion (17) présente un conduit d'amenée (22) pour un gaz combustible, pouvant être fermé et indépendant du système de piles à combustible (B).

4. Installation selon une des revendications 2 à 3,
caractérisée en ce que la chambre de combustion (17) présente un conduit d'amenée (23) pouvant être fermé pour l'air comprimé hors du réservoir d'air comprimé (21).

5. Installation selon une des revendications 1 à 4,
caractérisée en ce que l'installation pour le reformage à la vapeur présente un reformeur (9) chauffé de façon directe ou indirecte, au moins un réacteur à décalage (11) pour produire de façon supplémentaire H₂ pour charger la proportion de CO dans le gaz produit pouvant être engendré par reformage à la vapeur et un saturateur (10) pouvant être chauffé indirectement par la chaleur latente du gaz produit, qui peut être alimenté par des hydrocarbures gazeux et de l'eau encore liquide, le cas échéant préchauffée, et à partir duquel un mélange préchauffé de vapeur d'eau et d'hydrocarbures peut être amené au reformeur (9) par un conduit (15).

6. Installation selon une des revendications 1 à 5,
caractérisée en ce qu'un compresseur de H₂ (16) est monté dans le conduit d'amenée de H₂ (2).

7. Installation selon la revendication 5 ou 6,
caractérisée en ce que le reformeur est dimensionné relativement à son chauffage indirect par les gaz de combustion pour une combustion d'hydrocarbures qui a lieu dans des conditions atmosphériques ou sous une faible surpression.

8. Installation selon une des revendications 1 à 7,
caractérisée en ce que le reformeur (9) est dimensionné pour un reformage à la vapeur sous une faible pression, en particulier au-dessous de 3 bars.

9. Installation selon une des revendications 1 à 8,
caractérisée en ce que le système de piles à combustible est dimensionné pour une pression de service d'au maximum 10 bars, en particulier d'au maximum 3-8 bars.
